# EUROPEAN PATENT APPLICATION

(11) **EP 4 568 129 A1**
(43) Date of publication of application: **11.06.2025**
(21) Application number: 23214920.3
(22) Date of filing: 07.12.2023
(51) Int. Cl.: H04B 7/0452, H04B 7/06

(54) **METHOD FOR ENABLING COMMUNICATION BETWEEN A USER EQUIPMENT AND AN ANTENNA ENTITY OR FUNCTIONALITY OF A BASE STATION ENTITY, ANTENNA ENTITY OR FUNCTIONALITY, SYSTEM OR MOBILE COMMUNICATION NETWORK, USER EQUIPMENT, PROGRAM AND COMPUTER-READABLE MEDIUM**

(71) Applicant: Deutsche Telekom AG, 53113 Bonn (DE)
(72) Inventor: Beyer, Jürgen, 57250 Netphen (DE)
(74) Representative: Schwöbel, Thilo K.

(57) **Abstract**

The invention relates to a method for enabling communication between a user equipment and an antenna entity or functionality of a base station entity that is part of or associated or assigned to a mobile communication network, wherein the antenna entity or functionality comprises a plurality of antenna elements being arranged around a substantially circular periphery of the antenna entity or functionality and by means of which the antenna entity or functionality is enabled to provide radio coverage in the geographical area around the antenna entity or functionality, wherein, in order to enable communication between the user equipment and the antenna entity or functionality and, at least while the user equipment is in connected mode and located in an arbitrary horizontal direction of the radio coverage area around the antenna entity or functionality, the method comprises the step of dynamically selecting a subset of the plurality of antenna elements in order to provide the user equipment with radio coverage.

## Description

### BACKGROUND

The present invention relates a method for enabling communication between a user equipment and an antenna entity or functionality of a base station entity that is part of or associated or assigned to a mobile communication network, wherein the antenna entity or functionality comprises a plurality of antenna elements.

Furthermore, the present invention relates to a system or to a mobile communication network for enabling communication between a user equipment and an antenna entity or functionality of a base station entity that is part of or associated or assigned to the mobile communication network, wherein the antenna entity or functionality comprises a plurality of antenna elements.

Additionally, the present invention relates to an antenna entity or functionality for enabling communication with a user equipment, the antenna entity or functionality being part of, or associated or assigned to, a base station entity that is part of or associated or assigned to a mobile communication network, wherein the antenna entity or functionality comprises a plurality of antenna elements.

Furthermore, the present invention relates to a system or a user equipment for being used with an inventive system or with an inventive mobile communication network and/or with an inventive antenna entity or functionality according to the present invention.

Furthermore, the present invention relates to a program and to a computer-readable medium for enabling communication between a user equipment and an antenna entity or functionality according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part thereof, or a region within a country) in a repeating pattern of typically stationary (radio) cells (and associated base station entities) which typically belong to (or are used by or associated or assigned to) a mobile network operator (MNO).

One important part of such radio access networks used in such mobile communication networks are antenna entities or functionalities. Such antenna entities or functionalities are typically part of (or assigned or associated to) base station entities (typically realized as so-called gNBs that might also be split into a gNB centralized unit (CU) and a gNB distributed unit (DU) and/or a radio unit (RU)). Such antenna entities or functionalities are typically used to actually provide radio coverage to all kinds of communication devices using the radio access network of the mobile communication network - especially user equipments or internet-of-things devices - that are, temporarily due to their movement, or stationary or almost permanently, in the vicinity or the neighborhood of such antenna entities or functionalities, i.e. such antenna entities or functionalities actually provide the (radio) air interface that is used to provide communication services within mobile communication networks.

In conventionally known mobile communication networks, such base station entities or such antenna entities or functionalities often comprise three sectors (or sector antennas) with well separated main lobe directions (e.g. 120° between two neighboring sectors). Such antennas currently used are typically realized as planar antennas having a horizontal half power beam width between 60° and 90°. Therefore, the power radiated by such sector antennas decreases significantly in the horizontal plane close to the border to neighboring co-located sectors or antennas.

Furthermore, beam forming plays an important role, in currently known mobile communication networks, for coverage and capacity, especially when using the 3.6GHz band or even higher frequencies. But even in case the so-called midband (1.5 - 2.6GHz) is used, beam forming might become of interest when antennas with 4 X-Pol columns (=8T8R systems) will be widely used which further increase the cell capacity significantly.

However, even though the use beamforming provides the possibility to provide higher performance radiofrequency transmission and, especially, provides a higher degree of flexibility regarding directing a beam (of radiofrequency signals) to the served user equipment involving base station entities, in currently known mobile communication networks, there is nevertheless a need to improve, or increase, such flexibility or versatility in providing radio coverage and in performing radiofrequency transmissions.

### SUMMARY

An object of the present invention is to provide a technically simple, effective and cost-effective solution for enabling communication between a user equipment (and, typically, a multitude of user equipments located in a certain geographical area) and an antenna entity or functionality of a base station entity that is part of or associated or assigned to a mobile communication network (wherein the antenna entity or functionality comprises a plurality of antenna elements being arranged around (or along) a substantially circular periphery of the antenna entity or functionality and by means of which the antenna entity or functionality is enabled to provide radio coverage in the geographical area around the antenna entity or functionality) in a manner such as to use beamforming as well as to achieve a high degree of flexibility - especially regarding different beam directions -, thereby especially providing the possibility of higher performances in radiofrequency transmissions to and from such user equipment(s). A further object of the present invention is to provide a corresponding antenna entity or functionality, a corresponding system or a corresponding mobile communication network, a corresponding user equipment, and a corresponding program and computer-readable medium.

The object of the present invention is achieved by a method for enabling communication between a user equipment and an antenna entity or functionality of a base station entity that is part of or associated or assigned to a mobile communication network, wherein the antenna entity or functionality comprises a plurality of antenna elements being arranged around a substantially circular periphery of the antenna entity or functionality and by means of which the antenna entity or functionality is enabled to provide radio coverage in the geographical area around the antenna entity or functionality, wherein, in order to enable communication between the user equipment and the antenna entity or functionality and, at least while the user equipment is in connected mode and located in an arbitrary horizontal direction of the radio coverage area around the antenna entity or functionality, the method comprises the step of dynamically selecting a subset of the plurality of antenna elements in order to provide the user equipment with radio coverage.

It is thereby advantageously possible, according to the present invention, to provide radio coverage in a more efficient manner: user equipments are typically located in an arbitrary horizontal direction (i.e. in any direction between 0° and 360°) around the antenna entity or functionality if the antenna entity or functionality is providing radio coverage in its whole circumferential area, i.e. between 0° and 360°. As a consequence of the subset of the plurality of antenna elements being dynamically selected among the antenna elements, in order to provide the user equipments with radio coverage, this selection of a subset is able to be performed - according to the present invention and especially at least regarding user equipments that are currently not their idle mode (i.e. rather being in connected mode) - in the most efficient manner and, especially, irrespective of any sectors the antenna entity or functionality might have or realize with respect to other functionalities of the antenna entity or functionality.

In conventionally known antenna arrangements of current mobile communication networks, beamforming is able to be used (in case that the respective antenna elements are used). However, in conventionally known mobile communication networks, beamforming is typically used on top of using conventionally known antenna sectors, especially when using planar sector antennas.

According to the present invention, it is proposed to use an antenna entity or functionality, especially in the form of a cylindrical antenna entity or functionality, i.e. where the respective antenna elements are arranged in a cylindrical manner (or, if not comprising the complete, or whole, circumference of 360°, in a part-cylindrical manner, e.g. of 90° or of 180° or of 270°) around a substantially vertical axis, wherein the antenna elements are able to be used - at least regarding user equipment in connected mode - irrespective of any antenna sector, thereby especially being able to improve the beam forming performance.
Hence, according to the present invention, the antenna entity or functionality comprises a plurality of antenna elements being arranged around a substantially circular periphery of the antenna entity or functionality. By means of the antenna elements, the antenna entity or functionality is enabled to provide radio coverage in the geographical area around the antenna entity or functionality. In order to enable such communication between the user equipment and the antenna entity or functionality (at least while the user equipment is in connected mode and located in an arbitrary horizontal direction of the radio coverage area around the antenna entity or functionality), the present invention proposed to dynamically select a subset of the plurality of antenna elements in order to provide the user equipment with radio coverage.

According to the present invention, it is advantageously possible and preferred that dynamically operating the subset of the plurality of antenna elements involves performing radio channel sounding or measurements of or regarding the radio channel between the antenna entity or functionality and the user equipment, especially irrespective of where or in which direction of the antenna entity or functionality the user equipment is located in the coverage area of the antenna entity or functionality, wherein especially the plurality of antenna elements - being arranged around the substantially circular periphery - provide radio coverage, in a substantially continuous manner in a horizontal plane around the antenna entity or functionality, regarding
-- either the whole circumference of 360 degrees in a horizonal plane around the antenna entity or functionality,
-- or regarding a circumferential part of the whole circumference, especially a circumferential part covering 300 degrees or 270 degrees or 240 degrees,
wherein especially the radio coverage is provided by means of, or involving, horizontal beam forming and/or vertical beam forming.

It is thereby advantageously possible that the best (or most suitable) subset of antenna elements is able to be chosen - regarding a considered user equipment - by means of performing radio channel sounding or measurements. Especially, this is possible according to the present invention, irrespective of where (or in which direction of the antenna entity or functionality) the user equipment is actually located in the coverage area of the antenna entity or functionality. Hence, there is no fixed sectorization of the area surrounding the antenna entity or functionality, and the overall antenna gain of the antenna entity or functionality (i.e. taking into consideration all its antenna elements) is comparatively evenly distributed in the horizontal domain, i.e. the overall antenna gain by applying a suited sub-set of the antenna elements is available in the complete horizontal plane around the base station antenna.

According to the present invention, it is advantageously furthermore possible and preferred that dynamically operating the subset of the plurality of antenna elements involves
-- operating the subset of the plurality of antenna elements in order to provide the user equipment with radio coverage at a certain point in time and,
-- operating a further subset of the plurality of antenna elements in order to provide the user equipment with radio coverage at a different, especially subsequent, further point in time,
wherein the further subset of the plurality of antenna elements is or corresponds to a modified subset of the plurality of antenna elements - especially in case of a relative movement and/or a change of the direction between the user equipment and the antenna entity or functionality, and, especially, the further subset of the plurality of antenna elements being defined in dependency of where or in which direction the user equipment is located or is moved relative to the antenna entity or functionality - in a manner such that an antenna element is additionally part of the further subset and/or in a manner such that an antenna element is not part of the further subset anymore.

It is thereby advantageously possible according to the present invention to use the different antenna element of the antenna entity or functionality in a flexible and dynamic manner. Especially, it is advantageously possible to 'follow' a user equipment (that is, e.g., moving around, or at least partly around, the antenna entity or functionality) by means of subsequently dynamically selecting different subsets of antenna elements of the antenna entity or functionality - and this, without any restriction regarding fixed sectors (i.e. antenna elements that are arranged such as to be operated in a fixed combination and/or in a fixedly combined manner).

According to the present invention, it is furthermore advantageously possible and preferred that the antenna elements are arranged substantially around a substantially vertical axis, especially each antenna element - or a group of antenna elements collectively - extending substantially tangentially with regard to the substantially circular periphery of the antenna entity or functionality and/or that the antenna elements are
-- either oriented perpendicular to the horizontally extending plane orthogonal to the substantially vertical axis,
-- or positively or negatively inclined with regard to the horizontally extending plane orthogonal to the substantially vertical axis.

According to such a preferred embodiment of the present invention, it is advantageously possible to realize and implement the inventive method in a comparatively simple and efficient manner.
It is to be understood, that according to the present invention - and even in case that, regarding their arrangement or orientation with respect to the periphery of the antenna entity or functionality, the antenna elements are grouped, or, a group of antenna elements is collectively arranged in a specific manner - each antenna element is individually selectable to either be part of a subset of antenna elements serving a user equipment or not.
According to the present invention, the antenna elements of the antenna entity or functionality are typically oriented vertical, i.e. perpendicular to the horizontally extending plane orthogonal to the substantially vertical axis of the antenna entity or functionality. However, the antenna elements might also be inclined - either positively or negatively, i.e. either inclined downwardly, in a direction beneath the antenna entity or functionality (inclination to the bottom), or inclined upwardly, in a direction above the antenna entity or functionality (in any case while still being arranged substantially tangentially with regard to the substantially circular periphery of the antenna entity or functionality).

According to the present invention, it is furthermore advantageously possible and preferred that, in order to enable communication between the antenna entity or functionality and a further user equipment besides the user equipment, at least while both the user equipment and the further user equipment are, respectively, in connected mode, the method comprises the step of dynamically operating a second subset of the plurality of antenna elements in order to provide the further user equipment with radio coverage irrespective of where or in which direction the further user equipment is located relative to the antenna entity or functionality,
wherein either the second subset of the plurality of antenna elements corresponds to, or is different from, the subset of the plurality of antenna elements.

According to such a preferred embodiment of the present invention, it is advantageously possible to realize and implement the inventive method in a comparatively simple and efficient manner.

According to the present invention, it is furthermore advantageously possible and preferred that, in case that the angular distance, between the user equipment and the further user equipment and especially in a horizontal and/or in a vertical plane, is sufficiently large, both the user equipment and the further user equipment are served, by the antenna entity or functionality using multi-user multiple input multiple output, MU-MIMO, technology, in a manner such that, at least regarding specific time-frequency resources of the air interface of the antenna entity or functionality, both the user equipment and the further user equipment are simultaneously served by the antenna entity or functionality or provided with transmission resources.

According to such a preferred embodiment of the present invention, it is advantageously possible to realize and implement the inventive method in a comparatively simple and efficient manner.

According to the present invention, it is furthermore advantageously possible and preferred that - in case that multi-user multiple input multiple output, MU-MIMO, technology, is used for serving both the user equipment and the further user equipment - different scrambling codes are used for or regarding the user equipment and the further user equipment.

According to such a preferred embodiment of the present invention, it is advantageously possible to realize and implement the inventive method in a comparatively simple and efficient manner.

According to the present invention, it is furthermore advantageously possible and preferred that, regarding initial access purposes, where an initial access, with the antenna entity or functionality, is to be performed regarding either the user equipment and/or the further user equipment, the circumference around the antenna entity or functionality or the circumferential part of the whole circumference is divided into a plurality of angular sectors, wherein collectively, such angular sectors correspond to the circumference around the antenna entity or functionality or the circumferential part of the whole circumference, wherein the antenna elements corresponding to each angular sector are grouped, and wherein the antenna elements of each group of such grouped antenna elements is used to perform beam sweeping within each angular sector for realizing initial access.

According to such a preferred embodiment of the present invention, it is advantageously possible to realize and implement the inventive method in a comparatively simple and efficient manner.

Furthermore, the present invention relates to an antenna entity or functionality for enabling communication with a user equipment, the antenna entity or functionality being part of, or associated or assigned to, a base station entity that is part of or associated or assigned to a mobile communication network, wherein the antenna entity or functionality comprises a plurality of antenna elements being arranged around a substantially circular periphery of the antenna entity or functionality and by means of which the antenna entity or functionality is enabled to provide radio coverage in the geographical area around the antenna entity or functionality, wherein, in order to enable communication between the user equipment and the antenna entity or functionality and, at least while the user equipment is in connected mode, the antenna entity or functionality is configured such that a subset of the plurality of antenna elements is dynamically selected in order to provide the user equipment with radio coverage.

Furthermore, the present invention relates to a system or to a mobile communication network for enabling communication between a user equipment and an antenna entity or functionality of a base station entity that is part of or associated or assigned to the mobile communication network, wherein the antenna entity or functionality comprises a plurality of antenna elements being arranged around a substantially circular periphery of the antenna entity or functionality and by means of which the antenna entity or functionality is enabled to provide radio coverage in the geographical area around the antenna entity or functionality, wherein, in order to enable communication between the user equipment and the antenna entity or functionality and, at least while the user equipment is in connected mode, the system or mobile communication network, especially its antenna entity or functionality, is configured such that a subset of the plurality of antenna elements is dynamically selected in order to provide the user equipment with radio coverage.

Furthermore, the present invention relates to a user equipment for being used with an inventive system or with an inventive mobile communication network and/or for being used with an inventive antenna entity or functionality.

Additionally, the present invention relates to a program comprising a computer readable program code which, when executed on a computer and/or on an antenna entity or functionality of a base station entity and/or on a base station entity of a mobile communication network, or in part on an antenna entity or functionality of a base station entity and/or in part on a base station entity of a mobile communication network, causes the computer and/or the antenna entity or functionality of the base station entity and/or the base station entity to perform the inventive method.

Still additionally, the present invention relates to a computer-readable medium comprising instructions which when executed on a computer and/or on an antenna entity or functionality of a base station entity and/or on a base station entity of a mobile communication network, or in part on an antenna entity or functionality of a base station entity and/or in part on a base station entity of a mobile communication network, causes the computer and/or the antenna entity or functionality of the base station entity and/or the base station entity to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates the situation of a user equipment and a further user equipment in a mobile communication network being a terrestrial network, the user equipment and the further user equipment being served by a base station entity having, or using, at least an antenna entity or functionality.
Figure 2 schematically illustrates the situation of the user equipment and the further user equipment being served by an antenna entity or functionality (shown in top view) of a base station entity.
Figure 3 schematically illustrates the antenna entity or functionality of the base station entity using different sectors for initial access purposes.
Figure 4 schematically and exemplarily illustrates different arrangements, or configurations, of the antenna elements of different antenna entities or functionalities.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

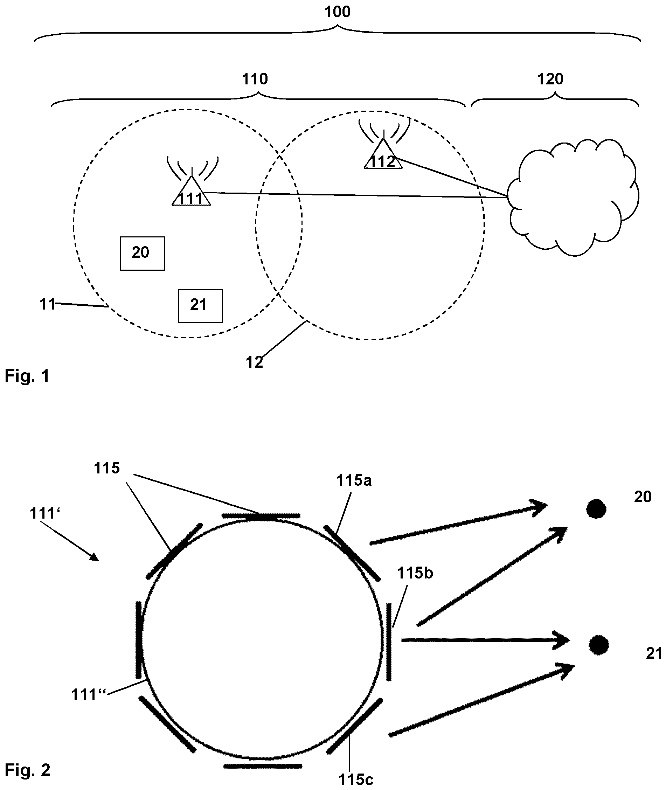

In Figure 1, a user equipment 20 and a further user equipment 21 are schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112, wherein the first base station entity 111 provides radio coverage in a first radio cell 11 and the second base station entity 112 provides radio coverage in a second radio cell 12.

In order to provide radio coverage in their respective radio coverage areas, or radio cells 11, 12, the base station entities 111, 112 of a mobile communication network typically comprise antenna entities or functionalities that might also be called radio units (RU). The functionality of a base station entity 111, 112 typically comprises at least one such antenna entity or functionality. The base station entity 111 is able to serve (i.e. providing communication services to) user equipments 20, 21 by means of or using the at least one antenna entity or functionality.

An example of such an antenna entity or functionality is schematically shown - in a top view - in Figure 2. The antenna entity or functionality is designated by means of reference sign 111'. The antenna entity or functionality 111' comprises a plurality of antenna elements 115 being arranged around a substantially circular periphery 111" of the antenna entity or functionality 111' and by means of which the antenna entity or functionality 111' is enabled to provide radio coverage in the geographical area around the antenna entity or functionality 111'. Exemplarily, in Figure 2, the antenna entity or functionality 111' is shown to comprise eight antenna elements 115 (and each antenna element 115 represents a vertical orientated antenna column); however, this is only a schematical and exemplary representation - the antenna entity or functionality 111' could also comprise (regarding a whole circumference, i.e. of 360°) a different number of antenna elements 115, e.g. four, or twelve, or sixteen, or twenty. In case that less than a whole circumference around the central vertical axis of the antenna entity or functionality 115 is concerned, e.g. the antenna entity or functionality 115 only covers a circumferential part, e.g. 300°, or 270°, or 240°, or 180°, a different number of antenna elements might be used.

Three of the antenna elements 115 shown in Figure 2 are furthermore and specifically designated by means of reference signs 115a, 115b and 115c, namely a first antenna element 115a, a second antenna element 115b and a third antenna element 115c. In the exemplary situation shown in Figure 2, the first and second antenna element 115a, 115b are serving the user equipment 20, whereas the second and third antenna element 115b, 115c are serving the further user equipment 21.
The user equipments 20, 21 are, respectively, located in an arbitrary horizontal direction (i.e. in any direction between 0° and 360°) around the antenna entity or functionality 111', and, as a consequence, a subset of the plurality of antenna elements 115 is dynamically selected in order to provide the user equipments 20, 21 with radio coverage. Hence, in the situation of the first user equipment 20, the respective dynamically selected subset of the plurality of antenna elements 115 comprises (and, in this case, consists of) the first and second antenna element 115a, 115b, whereas in the situation of the second user equipment 21, the respective dynamically selected subset of the plurality of antenna elements 115 comprises (and, in this case, consists of) the second and third antenna element 115b, 115c.
According to the present invention, this is the case (or, at least the case) if or while the user equipments 20, 21 are in connected mode, i.e. an ongoing communication is occurring between the antenna entity or functionality 111' and the respective user equipment 20, 21. According to the present invention, it is especially preferred that the dynamical selection of antenna elements 115 is able to be performed irrespective of any sectors the antenna entity or functionality 111' might have or realize.
Hence, according to the present invention, it is advantageously possible - especially by means of using vertically oriented cylindric base station antennas - to remove the problem of reduced coverage in the horizontal plane at the transition region between two adjacent sectors (e.g. of conventionally used antenna entities or functionalities having three sectors and using planar antennas), i.e. between one sector to the horizontally neighbored sector as they exist at sites with planar sector antennas.
According to the present invention, the basic principle of several sectors per site (of an antenna entity or functionality 111') and per frequency band might be kept, however, the border of such sectors are able to be dynamic. According to the present invention, especially using cylindric antennas, it is furthermore possible to contribute to an increase in the beam forming efficiency since the radio channel in the space domain can be better sampled as with planar antennas.
The design of the antenna entity or functionality 111' - especially when using cylindrical antennas - enables to serve user equipments 20, 21 in the horizontal plane without static sector borders as with conventionally used planar sector antennas. This is shown in Figure 2 where the user equipment 20 and the further user equipment 21 are partly sharing the same antenna elements (namely the second antenna element 115b. Applying the basic principle of multi-user multiple input multiple output (multi-user MIMO) the user equipment 20, 21 might even be served on the same time-frequency resources, leading - from capacity point of view - to a similar situation as given with individual sectors for both user equipments 20, 21, albeit with the dynamical 'sector borders'. To randomize the inter-UE interference, the 'dynamic sectors' are using the same principle as is conventionally done for inter-cell interference.
In case that the angular distance, between the user equipment 20 and the further user equipment 21 (and especially in a horizontal and/or in a vertical plane), is sufficiently large, both the user equipment 20 and the further user equipment 21 are especially able to be served by the antenna entity or functionality 111' using multi-user multiple input multiple output, MU-MIMO, technology, in a manner such that, at least regarding specific time-frequency resources of the air interface of the antenna entity or functionality 111', both the user equipment 20 and the further user equipment 21 are simultaneously served by the antenna entity or functionality 111' or provided with transmission resources. According to the present invention, and in this case of multi-user multiple input multiple output, MU-MIMO, technology, being used (for serving both the user equipment 20 and the further user equipment 21), different scrambling codes are especially used for or regarding the user equipment 20 and the further user equipment 21.

It is advantageously possible, according to the present invention, that the use of cylindric antennas (equipped with several vertically oriented antenna columns, i.e. antenna elements) advantageously provide the possibility to sense the radio channel in the space domain much better than planar antennas. Thus, beam forming works better as with planar antenna leading in a higher spectral efficiency.
Hence, dynamically operating the subset of the plurality of antenna elements 115 provides the possibility to use radio channel sounding or measurements of or regarding the radio channel between the antenna entity or functionality 111' and the user equipments 20, 21 especially irrespective of where or in which direction of the antenna entity or functionality 111' the user equipments 20, 21 are located in the coverage area of the antenna entity or functionality 111'.

Especially according to the present invention, the radio coverage is provided by means of, or involving, horizontal beam forming and/or vertical beam forming.

The dynamical operation of the antenna elements 115 of the antenna entity or functionality 111' is also able to be explained with reference to figure 2 (which shows both the user equipment 20 and the further user equipment 21): In another scenario (than the one represented in Figure 2), it is assumed that the further user equipment 21 is not present, and user equipment 20 is moving from its current position - or, from its position at a certain point in time - (being served by the first and second antenna elements 115a, 115b) to the position of the further user equipment 21 in Figure 2 - i.e. to its position at a different, further point in time: At such a different position, the (moving) user equipment 20 is served (in the same manner as the further user equipment 21 that is represented in Figure 2) by the second and third antenna elements 115b, 115c. I.e. the subset of the plurality of antenna elements 115 is dynamically operated such that
-- the subset (comprising the first and second antenna elements 115a, 115b) of the plurality of antenna elements 115 is operated in order to provide the user equipment 20 with radio coverage at its (first) point in time and,
-- the (further) subset (comprising the second and third antenna elements 115b, 115c) of the plurality of antenna elements 115 is operated in order to provide the user equipment 20 with radio coverage at a different further (or second) point in time.

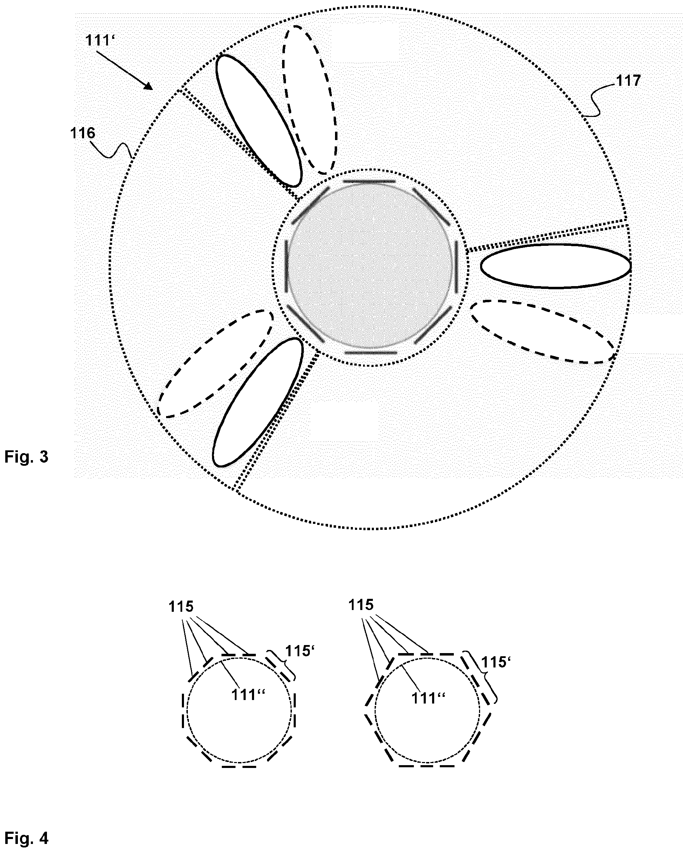

According to the present invention, the antenna elements 115 are arranged substantially around a substantially vertical axis. Especially, each antenna element 115 extends substantially tangentially with regard to the substantially circular periphery 111" of the antenna entity or functionality 111'. Such an arrangement of the antenna elements 115 is shown in Figure 2, i.e. each one of the eight antenna elements 115 shown in Figure 2 are oriented tangentially (with regard to the circular periphery 111"), i.e. they are oriented such that the respective angles of adjacent antenna elements differ by 45°. Other possible arrangements, or configurations, of the antenna elements 115 of an antenna entity or functionality 111' according to the present invention are schematically and exemplarily shown in Figure 4: The antenna entity or functionality 111' shown on the left hand side in Figure 4 comprises a total of sixteen antenna elements 115, wherein - not each such antenna element 115 is individually oriented tangentially with regard to the circular periphery 111" but - a group 115' of antenna elements (such a group comprising two adjacent antenna elements 115 in case of the representation on the left hand side in Figure 4) is collectively arranged such as to extend substantially tangentially with regard to the substantially circular periphery 111" of the antenna entity or functionality 111'. Likewise, the antenna entity or functionality 111' shown on the right hand side in Figure 4 comprises a total of eighteen antenna elements 115, wherein (again, not each such antenna element 115 is individually oriented tangentially with regard to the circular periphery 111" but) a group 115' of antenna elements (such a group comprising three adjacent antenna elements 115 in case of the representation on the right hand side in Figure 4) is collectively arranged such as to extend substantially tangentially with regard to the substantially circular periphery 111" of the antenna entity or functionality 111'.

In order to also be able to provide radio coverage to user equipments that are located (or positioned) above or below of the horizontal plane around the antenna entity or functionality 111', the antenna elements 115 might be either inclined or oriented (more or less) strictly vertically.
In the latter case (and typically according to the present invention), the antenna element 115 are oriented perpendicular to the horizontally extending plane orthogonal to the substantially vertical axis. Radio coverage is able to be provided even in case that user equipments are located (or positioned) above or below of the horizontal plane around the antenna entity or functionality 111', especially by means of using (especially besides the horizontal beam forming capabilities) vertical beam forming.
Alternatively (to the antenna elements 115 being oriented strictly vertically), the antenna elements 115 might also be arranged such that they are positively or negatively inclined with regard to the horizontally extending plane orthogonal to the substantially vertical axis. Also in such a configuration, vertical (and/or horizonal) beam forming is possible according to the present invention.

Regarding initial access purposes, where an initial access, with the antenna entity or functionality 111', is to be performed regarding either the user equipment 20 and/or the further user equipment 21 (i.e. in case that the user equipments 20, 21 are not in connected mode, but especially in idle mode), the circumference around the antenna entity or functionality 111' (or the circumferential part of the whole circumference) is divided into a plurality of angular sectors, wherein collectively, such angular sectors correspond to the circumference around the antenna entity or functionality 111' (or to the circumferential part of the whole circumference), and the antenna elements 115 corresponding to each such angular sector are grouped in a manner such that the antenna elements 115 of each group of such grouped antenna elements 115 is used to perform beam sweeping within each angular sector for realizing initial access.
Hence, for the initial access, the principle of beam sweeping as introduced in 5G NR is advantageously able to be used according to the present invention, especially when cylindric base station antennas are used. This, i.e. the antenna entity or functionality 111' of the base station entity using different sectors for initial access purposes, is schematically shown in Figure 3: Three sectors around the antenna entity or functionality 111' are shown (using dotted lines); one sector is designated by means of reference sign 116 and another is designated by means of reference sign 117. Exemplarily, in such a scenario three 'sectors' (or SSB beams) are assumed for initial access, schematically represented, in Figure 3, by means of three initial beams (ellipses, drawn-through lines) representing beam sweeping at a first point in time, and by means of three subsequent beams (ellipses, dashed lines) representing the three beams at a slightly subsequent second point in time. After the user equipment 20 is in connected mode, the dynamic 'sectorization' based on beam forming mechanism is started.

## Claims

1. Method for enabling communication between a user equipment (20) and an antenna entity or functionality (111') of a base station entity (111) that is part of or associated or assigned to a mobile communication network (100), wherein the antenna entity or functionality (111') comprises a plurality of antenna elements (115) being arranged around a substantially circular periphery (111") of the antenna entity or functionality (111') and by means of which the antenna entity or functionality (111') is enabled to provide radio coverage in the geographical area around the antenna entity or functionality (111'), wherein, in order to enable communication between the user equipment (20) and the antenna entity or functionality (111') and, at least while the user equipment (20) is in connected mode and located in an arbitrary horizontal direction of the radio coverage area around the antenna entity or functionality (111'), the method comprises the step of dynamically selecting a subset of the plurality of antenna elements (115) in order to provide the user equipment (20) with radio coverage.

2. Method according to claim 1, wherein dynamically operating the subset of the plurality of antenna elements (115) involves performing radio channel sounding or measurements of or regarding the radio channel between the antenna entity or functionality (111') and the user equipment (20),
especially irrespective of where or in which direction of the antenna entity or functionality (111') the user equipment (20) is located in the coverage area of the antenna entity or functionality (111'),
wherein especially the plurality of antenna elements (115) - being arranged around the substantially circular periphery (111") - provide radio coverage, in a substantially continuous manner in a horizontal plane around the antenna entity or functionality (111'), regarding
-- either the whole circumference of 360 degrees in a horizonal plane around the antenna entity or functionality (111'),
-- or regarding a circumferential part of the whole circumference, especially a circumferential part covering 300 degrees or 270 degrees or 240 degrees or 180 degrees,
wherein especially the radio coverage is provided by means of, or involving, horizontal beam forming and/or vertical beam forming.

3. Method according to one of the preceding claims, wherein dynamically operating the subset of the plurality of antenna elements (115) involves
-- operating the subset of the plurality of antenna elements (115) in order to provide the user equipment (20) with radio coverage at a certain point in time and,
-- operating a further subset of the plurality of antenna elements (115) in order to provide the user equipment (20) with radio coverage at a different, especially subsequent, further point in time,
wherein the further subset of the plurality of antenna elements (115) is or corresponds to a modified subset of the plurality of antenna elements (115) - especially in case of a relative movement and/or a change of the direction between the user equipment (20) and the antenna entity or functionality (111'), and, especially, the further subset of the plurality of antenna elements (115) being defined in dependency of where or in which direction the user equipment (20) is located or is moved relative to the antenna entity or functionality (111') - in a manner such that an antenna element is additionally part of the further subset and/or in a manner such that an antenna element is not part of the further subset anymore.

4. Method according to one of the preceding claims,
wherein the antenna elements (115) are arranged substantially around a substantially vertical axis, especially each antenna element (115) - or a group (115') of antenna elements (115) collectively - extending substantially tangentially with regard to the substantially circular periphery (111") of the antenna entity or functionality (111') and/or
wherein the antenna elements (115) are
-- either oriented perpendicular to the horizontally extending plane orthogonal to the substantially vertical axis,
-- or positively or negatively inclined with regard to the horizontally extending plane orthogonal to the substantially vertical axis.

5. Method according to one of the preceding claims, wherein, in order to enable communication between the antenna entity or functionality (111') and a further user equipment (21) besides the user equipment (20), at least while both the user equipment (20) and the further user equipment (21) are, respectively, in connected mode, the method comprises the step of dynamically operating a second subset of the plurality of antenna elements (115) in order to provide the further user equipment (21) with radio coverage irrespective of where or in which direction the further user equipment (21) is located relative to the antenna entity or functionality (111'),
wherein either the second subset of the plurality of antenna elements (115) corresponds to, or is different from, the subset of the plurality of antenna elements (115).

6. Method according to one of the preceding claims, wherein, in case that the angular distance, between the user equipment (20) and the further user equipment (21) and especially in a horizontal and/or in a vertical plane, is sufficiently large, both the user equipment (20) and the further user equipment (21) are served, by the antenna entity or functionality (111') using multi-user multiple input multiple output, MU-MIMO, technology, in a manner such that, at least regarding specific time-frequency resources of the air interface of the antenna entity or functionality (111'), both the user equipment (20) and the further user equipment (21) are simultaneously served by the antenna entity or functionality (111') or provided with transmission resources.

7. Method according to one of the preceding claims, wherein - in case that multi-user multiple input multiple output, MU-MIMO, technology, is used for serving both the user equipment (20) and the further user equipment (21) - different scrambling codes are used for or regarding the user equipment (20) and the further user equipment (21).

8. Method according to one of the preceding claims, wherein, regarding initial access purposes, where an initial access, with the antenna entity or functionality (111'), is to be performed regarding either the user equipment (20) and/or the further user equipment (21), the circumference around the antenna entity or functionality (111') or the circumferential part of the whole circumference is divided into a plurality of angular sectors, wherein collectively, such angular sectors correspond to the circumference around the antenna entity or functionality (111') or the circumferential part of the whole circumference, wherein the antenna elements (115) corresponding to each angular sector are grouped, and wherein the antenna elements (115) of each group of such grouped antenna elements (115) is used to perform beam sweeping within each angular sector for realizing initial access.

9. Antenna entity or functionality (111') for enabling communication with a user equipment (20), the antenna entity or functionality (111') being part of, or associated or assigned to, a base station entity (111) that is part of or associated or assigned to a mobile communication network (100), wherein the antenna entity or functionality (111') comprises a plurality of antenna elements (115) being arranged around a substantially circular periphery (111 ") of the antenna entity or functionality (111') and by means of which the antenna entity or functionality (111') is enabled to provide radio coverage in the geographical area around the antenna entity or functionality (111'), wherein, in order to enable communication between the user equipment (20) and the antenna entity or functionality (111') and, at least while the user equipment (20) is in connected mode, the antenna entity or functionality (111') is configured such that a subset of the plurality of antenna elements (115) is dynamically selected in order to provide the user equipment (20) with radio coverage.

10. System or mobile communication network (100) for enabling communication between a user equipment (20) and an antenna entity or functionality (111') of a base station entity (111) that is part of or associated or assigned to the mobile communication network (100), wherein the antenna entity or functionality (111') comprises a plurality of antenna elements (115) being arranged around a substantially circular periphery (111") of the antenna entity or functionality (111') and by means of which the antenna entity or functionality (111') is enabled to provide radio coverage in the geographical area around the antenna entity or functionality (111'), wherein, in order to enable communication between the user equipment (20) and the antenna entity or functionality (111') and, at least while the user equipment (20) is in connected mode, the system or mobile communication network (100), especially its antenna entity or functionality (111'), is configured such that a subset of the plurality of antenna elements (115) is dynamically selected in order to provide the user equipment (20) with radio coverage.

11. User equipment (20) for being used with a system or a mobile communication network (100) according to claim 10 and/or for being used with an antenna entity or functionality (111') according to claim 9.

12. Program comprising a computer readable program code, which, when executed on a computer and/or on an antenna entity or functionality (111') of a base station entity (111) and/or on a base station entity (111) of a mobile communication network (100), or in part on an antenna entity or functionality (111') of a base station entity (111) and/or in part on a base station entity (111) of a mobile communication network (100), causes the computer and/or the antenna entity or functionality (111') of the base station entity (111) and/or the base station entity (111) to perform a method according one of claims 1 to 8.

13. Computer-readable medium comprising instructions which when executed on a computer and/or on an antenna entity or functionality (111') of a base station entity (111) and/or on a base station entity (111) of a mobile communication network (100), or in part on an antenna entity or functionality (111') of a base station entity (111) and/or in part on a base station entity (111) of a mobile communication network (100), causes the computer and/or the antenna entity or functionality (111') of the base station entity (111) and/or the base station entity (111) to perform a method according one of claims 1 to 8.

## Amended claims

### Amended claims in accordance with Rule 137(2) EPC.

1. Method for enabling communication between a user equipment (20) and an antenna entity or functionality (111') of a base station entity (111) that is part of or associated or assigned to a mobile communication network (100),
wherein the antenna entity or functionality (111') comprises a plurality of antenna elements (115) being arranged around a substantially circular periphery (111") of the antenna entity or functionality (111') and by means of which the antenna entity or functionality (111') is enabled to provide radio coverage in the geographical area around the antenna entity or functionality (111'),
wherein, in order to enable communication between the user equipment (20) and the antenna entity or functionality (111') and, at least while the user equipment (20) is in connected mode and located in an arbitrary horizontal direction of the radio coverage area around the antenna entity or functionality (111'), the method comprises the step of dynamically selecting a subset of the plurality of antenna elements (115) irrespective of any sectors the antenna entity or functionality might have or realize with respect to other functionalities of the antenna entity or functionality in order to provide the user equipment (20) with radio coverage wherein dynamically operating the subset of the plurality of antenna elements (115) involves performing radio channel sounding between the antenna entity or functionality (111') and the user equipment (20) and
-- operating the subset of the plurality of antenna elements (115) in order to provide the user equipment (20) with radio coverage at a certain point in time and,
-- operating a further subset of the plurality of antenna elements (115) in order to provide the user equipment (20) with radio coverage at a different further point in time,
wherein the further subset of the plurality of antenna elements (115) corresponds to a modified subset of the plurality of antenna elements (115) - in case of a relative movement and/or a change of the direction between the user equipment (20) and the antenna entity or functionality (111').

2. Method according to claim 1,
wherein especially the plurality of antenna elements (115) - being arranged around the substantially circular periphery (111") - provide radio coverage, in a substantially continuous manner in a horizontal plane around the antenna entity or functionality (111'), regarding
-- either the whole circumference of 360 degrees in a horizonal plane around the antenna entity or functionality (111'),
-- or regarding a circumferential part of the whole circumference, especially a circumferential part covering 300 degrees or 270 degrees or 240 degrees or 180 degrees,
wherein especially the radio coverage is provided by means of, or involving, horizontal beam forming and/or vertical beam forming.

3. Method according to one of the preceding claims,
wherein the antenna elements (115) are arranged substantially around a substantially vertical axis, especially each antenna element (115) - or a group (115') of antenna elements (115) collectively - extending substantially tangentially with regard to the substantially circular periphery (111") of the antenna entity or functionality (111') and/or
wherein the antenna elements (115) are
-- either oriented perpendicular to the horizontally extending plane orthogonal to the substantially vertical axis,
-- or positively or negatively inclined with regard to the horizontally extending plane orthogonal to the substantially vertical axis

4. Method according to one of the preceding claims, wherein, in order to enable communication between the antenna entity or functionality (111') and a further user equipment (21) besides the user equipment (20), at least while both the user equipment (20) and the further user equipment (21) are, respectively, in connected mode, the method comprises the step of dynamically operating a second subset of the plurality of antenna elements (115) in order to provide the further user equipment (21) with radio coverage irrespective of where or in which direction the further user equipment (21) is located relative to the antenna entity or functionality (111'),
wherein either the second subset of the plurality of antenna elements (115) corresponds to, or is different from, the subset of the plurality of antenna elements (115).

5. Method according to one of the preceding claims, wherein, in case that the angular distance, between the user equipment (20) and the further user equipment (21) and especially in a horizontal and/or in a vertical plane, is sufficiently large, both the user equipment (20) and the further user equipment (21) are served, by the antenna entity or functionality (111') using multi-user multiple input multiple output, MU-MIMO, technology, in a manner such that, at least regarding specific time-frequency resources of the air interface of the antenna entity or functionality (111'), both the user equipment (20) and the further user equipment (21) are simultaneously served by the antenna entity or functionality (111') or provided with transmission resources.

6. Method according to one of the preceding claims, wherein - in case that multi-user multiple input multiple output, MU-MIMO, technology, is used for serving both the user equipment (20) and the further user equipment (21) - different scrambling codes are used for or regarding the user equipment (20) and the further user equipment (21).

7. Method according to one of the preceding claims, wherein, regarding initial access purposes, where an initial access, with the antenna entity or functionality (111'), is to be performed regarding either the user equipment (20) and/or the further user equipment (21), the circumference around the antenna entity or functionality (111') or the circumferential part of the whole circumference is divided into a plurality of angular sectors, wherein collectively, such angular sectors correspond to the circumference around the antenna entity or functionality (111') or the circumferential part of the whole circumference, wherein the antenna elements (115) corresponding to each angular sector are grouped, and wherein the antenna elements (115) of each group of such grouped antenna elements (115) is used to perform beam sweeping within each angular sector for realizing initial access.

8. Antenna entity or functionality (111') for enabling communication with a user equipment (20), the antenna entity or functionality (111') being part of, or associated or assigned to, a base station entity (111) that is part of or associated or assigned to a mobile communication network (100), wherein the antenna entity or functionality (111') comprises a plurality of antenna elements (115) being arranged around a substantially circular periphery (111") of the antenna entity or functionality (111') and by means of which the antenna entity or functionality (111') is enabled to provide radio coverage in the geographical area around the antenna entity or functionality (111'), wherein, in order to enable communication between the user equipment (20) and the antenna entity or functionality (111') and, at least while the user equipment (20) is in connected mode, the antenna entity or functionality (111') is configured such that a subset of the plurality of antenna elements (115) irrespective of any sectors the antenna entity or functionality might have or realize with respect to other functionalities of the antenna entity or functionality is dynamically selected in order to provide the user equipment (20) with radio coverage
wherein dynamically operating the subset of the plurality of antenna elements (115) involves performing radio channel sounding between the antenna entity or functionality (111') and the user equipment (20) and
-- operating the subset of the plurality of antenna elements (115) in order to provide the user equipment (20) with radio coverage at a certain point in time and,
-- operating a further subset of the plurality of antenna elements (115) in order to provide the user equipment (20) with radio coverage at a different further point in time,
wherein the further subset of the plurality of antenna elements (115) corresponds to a modified subset of the plurality of antenna elements (115) - in case of a relative movement and/or a change of the direction between the user equipment (20) and the antenna entity or functionality (111').

9. System or mobile communication network (100) for enabling communication between a user equipment (20) and an antenna entity or functionality (111') of a base station entity (111) that is part of or associated or assigned to the mobile communication network (100), wherein the antenna entity or functionality (111') comprises a plurality of antenna elements (115) being arranged around a substantially circular periphery (111") of the antenna entity or functionality (111') and by means of which the antenna entity or functionality (111') is enabled to provide radio coverage in the geographical area around the antenna entity or functionality (111'), wherein, in order to enable communication between the user equipment (20) and the antenna entity or functionality (111') and, at least while the user equipment (20) is in connected mode, the system or mobile communication network (100), especially its antenna entity or functionality (111'), is configured such that a subset of the plurality of antenna elements (115) ) irrespective of any sectors the antenna entity or functionality might have or realize with respect to other functionalities of the antenna entity or functionality is dynamically selected in order to provide the user equipment (20) with radio coverage
wherein dynamically operating the subset of the plurality of antenna elements (115) involves performing radio channel sounding between the antenna entity or functionality (111') and the user equipment (20) and
-- operating the subset of the plurality of antenna elements (115) in order to provide the user equipment (20) with radio coverage at a certain point in time and,
-- operating a further subset of the plurality of antenna elements (115) in order to provide the user equipment (20) with radio coverage at a different further point in time,
wherein the further subset of the plurality of antenna elements (115) corresponds to a modified subset of the plurality of antenna elements (115) - in case of a relative movement and/or a change of the direction between the user equipment (20) and the antenna entity or functionality (111').

10. User equipment (20) for being used with a system or a mobile communication network (100) according to claim 10 and/or for being used with an antenna entity or functionality (111') according to claim 9.

11. Program comprising a computer readable program code, which, when executed on a computer and/or on an antenna entity or functionality (111') of a base station entity (111) and/or on a base station entity (111) of a mobile communication network (100), or in part on an antenna entity or functionality (111') of a base station entity (111) and/or in part on a base station entity (111) of a mobile communication network (100), causes the computer and/or the antenna entity or functionality (111') of the base station entity (111) and/or the base station entity (111) to perform a method according one of claims 1 to 8.

12. Computer-readable medium comprising instructions which when executed on a computer and/or on an antenna entity or functionality (111') of a base station entity (111) and/or on a base station entity (111) of a mobile communication network (100), or in part on an antenna entity or functionality (111') of a base station entity (111) and/or in part on a base station entity (111) of a mobile communication network (100), causes the computer and/or the antenna entity or functionality (111') of the base station entity (111) and/or the base station entity (111) to perform a method according one of claims 1 to 8.
